(19) **Europäisches Patentamt European Patent Office Office européen des brevets**

(11) **EP 2 100 933 B1**

(12) **EUROPEAN PATENT SPECIFICATION**

(45) Date of publication and mention of the grant of the patent:
**20.10.2010 Bulletin 2010/42**

(51) Int Cl.:
*C09J 7/00* (2006.01)     *C09J 7/02* (2006.01)
*C09J 133/06* (2006.01)

(21) Application number: **09003273.1**

(22) Date of filing: **06.03.2009**

(54) **Double-sided pressure-sensitive adhesive sheet and method for fixing plastic film**

Doppelseitige, druckempfindliche Klebefolie und Verfahren zur Befestigung von Kunststofffolie

Feuille adhésive sensible à la pression recto-verso et procédé de fixation de film plastique

(84) Designated Contracting States:
**DE**

(30) Priority: **13.03.2008   JP 2008063729**

(43) Date of publication of application:
**16.09.2009   Bulletin 2009/38**

(73) Proprietor: **NITTO DENKO CORPORATION Ibaraki-shi, Osaka 567-8680 (JP)**

(72) Inventors:
• **Kishioka, Hiroaki**
**Ibaraki-shi**
**Osaka 567-8680 (JP)**

• **Kabutoya, Ryuuichi**
**Ibaraki-shi**
**Osaka 567-8680 (JP)**

(74) Representative: **Grünecker, Kinkeldey, Stockmair & Schwanhäusser Anwaltssozietät Leopoldstrasse 4 80802 München (DE)**

(56) References cited:
**EP-A- 1 574 557     US-A1- 2005 253 277**

**Description**

**FIELD OF THE INVENTION**

The present invention relates to a double-sided pressure-sensitive adhesive sheet. In more detail, the invention relates to a double-sided pressure-sensitive adhesive sheet in which a pressure-sensitive adhesive layer is a thin layer and which has excellent smoothing property and uniformity in thickness, and moreover, has excellent adhesiveness on a glass and a transparent plastic such as acrylic, polycarbonate and polyethylene terephthalate; excellent foaming/peeling preventive property; as well as excellent transparency.

**BACKGROUND OF THE INVENTION**

In recent years, especially in the field of mobile devices such as a cellular phone and a smart phone; display of television and computer; and the like, there are numerous of applications of attaching and fixing an optical film and the like to a transparent plastic base such as a polycarbonate resin plate and an acrylic resin plate by using a double-sided pressure-sensitive adhesive sheet (double-sided pressure-sensitive adhesive tape). In these applications, the double-sided pressure-sensitive adhesive sheet is required to have not only transparency which does not ruin visibility of the transparent plastic base and the optical film, but also a property of preventing lifting and peeling (foaming/peeling preventive property) which causes neither lifting nor peeling at an adhering interface due to bubbles (foam) generated from the plastic base and the like, even after performing a weather resistant test under severe conditions such as high-temperature conditions or high-temperature and high-humidity conditions. Specifically, under the conditions as high-temperature conditions or high-temperature and high-humidity conditions, there comes a time when a plastic base such as an acrylic resin plate or a polycarbonate resin plate generates an outgas which is thought to be attributable to the water absorbed or a residual monomer. For that reason, when an optical film made of a base film having a barrier property, such as a polyethylene terephthalate (PET) film, is laminated onto such plastic base by using a double-sided pressure-sensitive adhesive sheet and they are then placed under high-temperature and high-humidity conditions, lifting or peeling occurs at the adhering interface between the base and the pressure-sensitive adhesive layer due to the bubbles (foam) generated from the base and the like. This not only deteriorates an appearance but also considerably impairs the visibility.

In regard to the above-mentioned problem, as for the double-sided pressure-sensitive adhesive sheet having excellent adhesiveness and transparency as well as having great foaming/peeling preventive property, there has been known a double-sided pressure-sensitive adhesive sheet using, for example, a pressure-sensitive adhesive composition composed of specific acrylic polymers and acrylic oligomers (see, Japanese Patent No. 3907611 and Japanese Unexamined Patent Application Publication No. 2005-255877).

However, due to a demand for miniaturization/slimization of mobile devices in recent years, the above-mentioned plastic base and optical film are also becoming slimized. Consequently, in the case that the plastic base and the optical film are laminated with each other by using conventional pressure-sensitive adhesive sheet (pressure-sensitive adhesive layer), there has been found that a poor appearance that a surface of a display thereof looks like an orange peel occurs because when light is reflected on the display thereof, a mottle of the reflected light occurs.

The further examination on the above-mentioned poor appearance was carried out. As a result, there has been found that a minute variation in a thickness of the pressure-sensitive adhesive layer which laminates the slimized plastic substrate and optical film causes a reflected light mottle and this is a main cause of the poor appearance.

**SUMMARY OF THE INVENTION**

Accordingly, an object of the present invention is to provide a double-sided pressure-sensitive adhesive sheet which has excellent transparency, adhesiveness and foaming/peeling preventive property, and further shows excellent appearance when the double-sided pressure-sensitive adhesive sheet is laminated especially to slimized plastic base and the like, owing to a small value of a thickness unevenness of the whole surface of a pressure-sensitive adhesive layer (minute variation in a thickness of the pressure-sensitive adhesive layer).

The present inventors have made intensive studies in order to accomplish the above-mentioned object. As a result, the inventors have found that, in regard to a double-sided pressure-sensitive adhesive sheet having a pressure-sensitive adhesive layer which has a specific thickness and is formed of a pressure-sensitive adhesive composition containing an acrylic polymer and an acrylic oligomer each having a specific molecular weight and a specific composition, when a thickness unevenness of the whole surface of the pressure-sensitive adhesive layer of the double-sided pressure-sensitive adhesive sheet is regulated, it is possible to obtain a double-sided pressure-sensitive adhesive sheet having excellent transparency and foaming/peeling preventive property, as well as excellent appearance even when the sheet is thin, thereby completing the present invention.

That is, the invention is provides:

a double-sided pressure-sensitive adhesive sheet, comprising a pressure-sensitive adhesive layer which has a thickness of 3 to 15 $\mu$m and comprises a pressure-sensitive adhesive composition containing the following acrylic polymer (a) and acrylic oligomer (b), wherein the acrylic oligomer (b) is contained at a proportion of 10 to 35 parts by weight per 100 parts by weight of the acrylic polymer (a),

acrylic polymer (a): an acrylic polymer having a weight-average molecular weight of 500,000 to 900,000 and formed from monomer components containing at least 50 to 99% by weight of alkyl (meth)acrylate of which the alkyl group has 4 to 12 carbon atoms, and 1 to 10% by weight of a carboxyl group-containing monomer,

acrylic oligomer (b): an acrylic oligomer having a weight-average molecular weight of 3,000 to 6,000 and formed from monomer components containing at least 50 to 99% by weight of (meth)acrylic ester, which has a glass transition temperature of 60 to 190°C when it is formed into a homopolymer and has a cyclic structure, and 1 to 10% by weight of a carboxyl group-containing monomer; and

wherein the pressure-sensitive adhesive layer has a thickness unevenness of the whole surface of 0.030 $\mu$m or less, the thickness unevenness of the whole surface of the pressure-sensitive adhesive layer being a value which is obtained by converting an interference fringe obtained by a laser interferometer into the thickness $h_i$ of the pressure-sensitive adhesive layer in accordance with a fringe scanning method (stripe scanning method) and then making a calculation using the $h_i$ value obtained in the measurement range of a diameter of 30 mm in accordance with the following formula (1):

$$\text{(Thickness unevenness of the whole surface)} = \sqrt{\frac{\Sigma\, h_i^2}{N} - \left(\frac{\Sigma\, h_i}{N}\right)^2} \qquad (1)$$

wherein i is an integer of 1 to N, and N is a number of sampling.

In the above-mentioned double-sided pressure-sensitive adhesive sheet, it is preferable that both the acrylic polymer (a) and the acrylic oligomer (b) are prepared by a solution polymerization method.

In addition, the above-mentioned double-sided pressure-sensitive adhesive sheet, it is preferable that a separator, which is prepared by subjecting a plastic film to a releasant treatment to have an arithmetic average roughness (Ra) on the releasant-treated surface of 0.05 $\mu$m or less, is provided on at least one surface of the double-sided pressure-sensitive adhesive sheet in such a way that the releasant-treated surface of the separator is brought into contact with the surface of the pressure-sensitive adhesive layer.

Furthermore, it is preferable that the above-mentioned double-sided pressure-sensitive adhesive sheet is a substrate-less double-sided pressure-sensitive adhesive sheet having no substrate, in which a separator, which is prepared by subjecting a plastic film to a releasant treatment to have an arithmetic average roughness (Ra) on the releasant-treated surface of 0.05 $\mu$m or less, is provided on each surface of the pressure-sensitive adhesive layer in such a manner that the releasant-treated surface of the separator is brought into contact with each surface of the pressure-sensitive adhesive layer.

Additionally, in the above-mentioned double-sided pressure-sensitive adhesive sheet, it is preferable that the pressure-sensitive adhesive layer is provided on each surface of a plastic film substrate having a total light transmittance of 85% or higher and a haze value of 1.5% or lower.

Moreover, the above-mentioned double-sided pressure-sensitive adhesive sheet preferably has a total light transmittance of 90% or higher and a haze value of 1.5% or lower.

In addition, the invention provides a method for fixing a plastic film, which includes attaching and fixing a plastic film through the above-mentioned double-sided pressure-sensitive adhesive sheet.

Since a double-sided pressure-sensitive adhesive sheet according to the present invention has the above-mentioned constitutions, the double-sided pressure-sensitive adhesive sheet has excellent adhesiveness, transparency and foaming/peeling preventive property. For that reason, when the double-sided pressure-sensitive adhesive sheet is especially used to a lamination of a slimized optical member and the like, optical properties of such products such as visibility and the like can be improved. In addition, it is possible to slimize the pressure-sensitive adhesive sheet and it is advantageous to miniaturize and slimize a product which employs the pressure-sensitive adhesive sheet. Moreover, a quality of a display apparatus especially in which a slimized optical member is laminated with the pressure-sensitive adhesive sheet is improved. In addition, in the pressure-sensitive adhesive sheet, since a reflected light mottle caused by a minute variation in a thickness of the pressure-sensitive adhesive layer does not occur, a poor appearance does not occur and a quality of products is improved.

## DETAILED DESCRIPTION OF THE INVENTION

A double-sided pressure-sensitive adhesive sheet according to the present invention has at least a pressure-sensitive adhesive layer formed of a pressure-sensitive adhesive composition (acrylic pressure-sensitive adhesive composition) which contains an acrylic polymer (a) and an acrylic oligomer (b) as essential components.

Pressure-Sensitive Adhesive Composition

(Acrylic Polymer (a))

The acrylic polymer (a) used for the pressure-sensitive adhesive composition is a polymer composed of alkyl (meth)acrylates of which alkyl group has 4 to 12 carbon atoms (it may be referred to as "$C_{4-12}$ alkyl (meth)acrylates") as a main monomer component. In addition, the acrylic polymer (a) contains a carboxyl group-containing monomer as an essential monomer component for a copolymerization in addition to the above-mentioned main monomer components. Moreover, other monomer components may be used according to need. The term "(meth)acrylic" means "acrylic" and/or "methacrylic". The below is the same as above.

As for the above-mentioned $C_{4-12}$ alkyl (meth)acrylates, there is no particular limitation so long as it is an alkyl (meth)acrylate having linear or branched alkyl group having 4 to 12 carbon atoms. Examples thereof include n-butyl (meth)acrylate, isobutyl (meth)acrylate, sec-butyl (meth)acrylate, t-butyl (meth)acrylate, pentyl (meth)acrylate, isopentyl (meth)acrylate, neopentyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, and dodecyl (meth)acrylate. As for the $C_{4-12}$ alkyl (meth)acrylates, n-butyl (meth)acrylate is particularly preferable. The above-mentioned main monomer components can be used alone or in combination of two or more kinds thereof.

In regard to the acrylic polymer (a), the proportion of the $C_{4-12}$ alkyl (meth)acrylate, which is the main monomer component, is 50 to 99% by weight, and preferably 70 to 99% by weight, per 100% by weight of the total weight of the monomer components. In case where the proportion of the $C_{4-12}$ alkyl (meth)acrylate is lower than 50% by weight per the total weight of the monomer components, it is impossible to obtain adhesive force (pressure-sensitive adhesive force) and cohesive force required for pressure-sensitive adhesives.

Examples of above-mentioned the carboxyl group-containing monomer include (meth)acrylic acid, itaconic acid, maleic acid, fumaric acid, and crotonic acid. An acid anhydride of these carboxyl group-containing monomers (e.g., a monomer containing an acid anhydride group, such as maleic anhydride and itaconic anhydride) can also be used as the carboxyl group-containing monomer. The monomer components can be used alone or in combination of two or more kinds thereof.

In regard to the acrylic polymer (a), the proportion of the carboxyl group-containing monomer is 1 to 10% by weight, and preferably 3 to 8% by weight, per the total weight of the monomer components. In case where the proportion is less than 1% by weight, a satisfactory adhesiveness to adherends is not secured and a transparency may be deteriorated. On the other hand, when the proportion exceeds 10% by weight, it may lead to problems such as poor applicability due to an increase in the viscosity of the pressure-sensitive adhesive.

In regard to the acrylic polymer (a), other monomers copolymerizable with the above-mentioned $C_{4-12}$ alkyl (meth)acrylate and with the carboxyl group-containing monomer may be used in combination with these monomers according to need. In addition, the proportion of such copolymerizable monomers per the total weight of the monomer components can be suitably selected in the range less than 40% by weight according to the kinds of each monomer component. However, for imparting satisfactory pressure-sensitive adhesiveness, it is desirable that such copolymerizable monomers be used in such an amount as to yield an acrylic polymer (a) having a glass transition temperature of -20°C or lower (preferably -70 to -35°C). The above-mentioned proportion is more preferably less than 30% by weight and even more preferably less than 20% by weight.

Examples of the above-mentioned other copolymerizable monomers include alkyl (meth)acrylates of which alkyl group has 1 to 3 carbon atoms such as methyl (meth)acrylate, ethyl (meth)acrylate, propyl (meth)acrylate, and isopropyl (meth)acrylate; alkyl (meth)acrylates of which alkyl group has 13 to 20 carbon atoms such as tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate; (meth)acrylates containing a non-aromatic ring, such as cycloalkyl (meth)acrylates (e.g., cyclohexyl (meth)acrylate and the like), and isobornyl (meth)acrylate; (meth)acrylic esters containing an aromatic ring, such as aryl (meth)acrylates (e.g., phenyl (meth)acrylate and the like), aryloxyalkyl (meth)acrylates (e.g., phenoxyethyl (meth)acrylate and the like), and arylalkyl (meth)acrylates (e.g., benzyl (meth)acrylate and the like); acrylic monomers containing an epoxy group, such as glycidyl (meth)acrylate, and methylglycidyl (meth)acrylate; vinyl ester monomers such as vinyl acetate, and vinyl propionate; styrene monomers such as styrene, and α-methylstyrene; hydroxyl group-containing monomers such as hydroxyethyl (meth)acrylate, hydroxypropyl (meth)acrylate, and hydroxybutyl (meth)acrylate; alkoxyalkyl (meth)acrylate monomers such as methoxyethyl (meth)acrylate, and ethoxyethyl (meth)acrylate; olefin monomers such as ethylene, propylene, isoprene, and butadiene; and vinyl ether monomers such as vinyl ether.

Examples of the above-mentioned other copolymerizable monomers also include polyfunctional monomers such as hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, glycerol di(meth)acrylate, trimethylolpropane tri(meth)acrylate, pentaerythritol tri(meth)acrylate, dipentaerythritol hexa(meth)acrylate, epoxy acrylates, polyester acrylates, urethane acrylates, divinylbenzene, butyl di(meth)acrylate, and hexyl di(meth)acrylate.

In addition, as for the above-mentioned other copolymerizable monomers, monomers containing a nitrogen atom, for example, aminoalkyl (meth)acrylate monomers such as aminoethyl (meth)acrylate, N,N-dimethylaminoethyl (meth)acrylate, and t-butylaminoethyl (meth)acrylate,; (N-substituted) amide monomers such as (meth)acrylamide, N,N-dimethyl(meth)acrylamide, N-butyl(meth)acrylamide, and N-hydroxy(meth)acrylamide; cyanoacrylate monomers such as acrylonitrile, and methacrylonitrile; and monomers containing an isocyanate group, such as 2-methacryloyloxyethyl may be used. However, it is more preferable not to use such monomers containing a nitrogen atom because it is causative of the yellowing of the pressure-sensitive adhesive under heating.

The acrylic polymer (a) can be prepared by the use of known or common polymerization methods. Examples of methods for polymerizing the acrylic polymer (a) include a solution polymerization method, an emulsion polymerization method, a bulk polymerization method, and a polymerization method with ultraviolet irradiation. The solution polymerization method is much preferred from the viewpoints of transparency, water resistance, cost, and the like.

In addition, polymerization initiator and the like for use in polymerization of the acrylic polymer (a) are not particularly limited, and can be suitably selected from the known or common ones. More specifically, as for the polymerization initiator, it is preferred to use oil-soluble polymerization initiators, for example, azo polymerization initiators such as 2,2'-azobisisobutyronitrile, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane), and dimethyl-2,2'-azobis(2-methylpropionate); peroxide polymerization initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, and 1,1-bis(t-butylperoxy)cyclododecane; and the like. Such polymerization initiators can be used alone or in combination of two or more kinds thereof. The amount of the polymerization initiator to be used may be an ordinary amount to be used. For example, the amount thereof can be selected in the range of about 0.01 to 1 part by weight per 100 parts by weight of total monomer components.

In the solution polymerization, various general solvents can be used. Examples of such solvents include organic solvents including esters such as ethyl acetate, and n-butyl acetate; aromatic hydrocarbons such as toluene, and benzene; aliphatic hydrocarbons such as n-hexane, and n-heptane; alicyclic hydrocarbons such as cyclohexane, and methylcyclohexane; ketones such as methyl ethyl ketone, and methyl isobutyl ketone. Such solvents can be used alone or in combination of two or more kinds thereof.

According to the present invention, a weight-average molecular weight of the acrylic polymer (a) is 500,000 to 900,000, preferably 550,000 to 850,000, and more preferably 550,000 to 800,000. In the invention, it is preferred to increase a concentration of a solid content in the pressure-sensitive adhesive composition solution used for forming the pressure-sensitive adhesive layer and to slimize a thickness of film containing the solvents at the time of drying the coating layer of the pressure-sensitive adhesive composition solution to thereby regulate the convection, because a thickness unevenness of the whole surface of a pressure-sensitive adhesive layer can be easily reduced. When the weight-average molecular weight of the acrylic polymer (a) exceeds 900,000, it is not preferable because the viscosity of the pressure-sensitive adhesive is increased and it is impossible to increase the concentration of the solid content in the pressure-sensitive adhesive composition solution from a viewpoint of applicability. On the other hand, when the weight-average molecular weight thereof is less than 500,000, the pressure-sensitive adhesive force and cohesive force required as for the pressure-sensitive adhesives cannot be exhibited.

In addition, in the invention, the weight-average molecular weights (Mw) of the acrylic polymer (a) and the acrylic oligomer (b) to be described below can be determined by gel permeation chromatography (GPC) method. Specifically, the weight-average molecular weights thereof can be obtained by the use of a product named "HLC-8120 GPC" (manufactured by Tosoh Corp.) as a GPC measuring apparatus under the following GPC measurement conditions according to a polystyrene equivalent.

GPC Measurement Conditions

Sample concentration: 0.2% by weight (tetrahydrofuran solution)
Sample injection amount: 10 μl
Eluent: tetrahydrofuran (THF)
Flow rate (speed): 0.6 mL/min

Column temperature (measuring temperature): 40°C
Column: product name "TSK gel Super HM-H/H4000/H3000/H2000"

(manufactured by Tosho Corp.)

Detector: differential refractometer (RI)

The weight-average molecular weight of the acrylic polymer (a) can be controlled by the kinds and amounts of the polymerization initiator, and temperature and time during polymerization; and further controlled by a monomer concentration, a monomer dropping rate, and the like.

(Acrylic Oligomer (b))

An acrylic oligomer (b) used for a pressure-sensitive adhesive composition in the present invention is a polymer composed of (meth)acrylic ester, which has a glass transition temperature (Tg) of 60 to 190°C when it is formed into a homopolymer and has a cyclic structure in a molecule thereof as a main monomer component. When the acrylic oligomer (b) composed of the above-mentioned main monomer component is used, the oligomer is suitably compatible with the polymer and Tg thereof is high. For that reason, the pressure-sensitive adhesive layer can exhibit an excellent foaming/peeling preventive property even under high-temperature and high-humidity conditions. In addition, the acrylic oligomer (b) contains a carboxyl group-containing monomer as an essential monomer component for a copolymerization in addition to the above-mentioned main monomer component. Moreover, other monomer components may be used according to need.

As for the ring in (meth)acrylic ester, which has a Tg of 60 to 190°C when it is formed into a homopolymer and has a cyclic structure in the molecule thereof, it may be any of aromatic rings and non-aromatic rings. However, non-aromatic rings are preferred. In addition, examples of the aromatic rings include aromatic hydrocarbon rings (e.g., benzene ring, fused carbon rings as in naphthalene, and the like) and various aromatic heterocycles. In addition, examples of the non-aromatic rings include non-aromatic alicyclic rings (e.g., cycloalkane rings such as cyclopentane ring, cyclohexane ring, cycloheptane ring, and cyclooctane ring; cycloalkene rings such as cyclhexene ring; and the like), and non-aromatic bridged rings (e.g., dicyclic hydrocarbon rings such as in pinane, pinene, bornane, norbornane, and norbornene; tricyclic hydrocarbon rings such as in adamantane; and other bridged hydrocarbon rings including tetracyclic hydrocarbon rings). Examples of such (meth)acrylic esters having a cyclic structure include (meth)acrylic esters containing a non-aromatic ring, e.g., cycloalkyl (meth)acrylates such as cyclohexyl (meth)acrylate, and isobornyl (meth)acrylate; and (meth)acrylic esters containing an aromatic ring, e.g., aryl (meth)acrylates such as phenyl (meth)acrylate, aryloxyalkyl (meth)acrylates such as phenoxyethyl (meth)acrylate, and arylalkyl (meth)acrylates such as benzyl (meth)acrylate. Among these, a ring in (meth)acrylic ester, which has a glass transition temperature of 60 to 190°C (preferably 60 to 150°C and more preferably 60 to 120°C) when it is formed into a homopolymer thereof, is suitably selected for use.

Incidentally, a value of the glass transition temperature (Tg) of the above-mentioned homopolymer is included in "Polymer Handbook (Vol. 3, John Wiley&Sons, Inc., 1989)".

As for examples of such (meth)acrylic ester, which has a Tg of 60 to 190°C when it is formed into a homopolymer and has a cyclic structure in the molecule thereof, are not particularly limited. However, cyclohexyl methacrylate (Tg = 66°C), isobornyl acrylate (Tg = 97°C), isobornyl methacrylate (Tg = 180°C), and the like are preferably exemplified.

In regard to the acrylic oligomer (b), the proportion of (meth)acrylic ester having a Tg of 60 to 190°C when it is formed into a homopolymer and having a cyclic structure in the molecule thereof, which is a main monomer component, is 50 to 99% by weight, preferably 70 to 99% by weight, and more preferably 80 to 97% by weight per the total weight of the monomer components. The above-mentioned main monomer component can be used alone or in combination of two or more kinds thereof.

In addition, the acrylic oligomer (b) contains the carboxyl group-containing monomer as the essential monomer component for the copolymerization. Same as the case of the carboxyl group-containing monomer for the above-mentioned acrylic polymer (a), examples of such carboxyl group-containing monomer include (meth)acrylic acid, itaconic acid, maleic acid, fumaric acid, and crotonic acid. An acid anhydride of these carboxyl group-containing monomers (e.g., a monomer containing an acid anhydride group, such as maleic anhydride, and itaconic anhydride) can also be used as the carboxyl group-containing monomer.

The proportion of the carboxyl group-containing monomer is 1 to 10% by weight and preferably 3 to 8% by weight per the total weight of the monomer components. In case where the proportion of the carboxyl group-containing monomer is less than 1% by weight, transparency tends to decrease and the viscosity of the pressure-sensitive adhesive composition may be increased. On the other hand, when the proportion exceeds 10% by weight, temperature control during polymerization tends to be difficult, which is not preferable.

In regard to the acrylic oligomer (b), in addition to the above-mentioned monomer components, other copolymerizable monomers may be used in combination with the monomer components according to need. As for such other copolymerizable monomers, monomers which are monomer components other than the main monomer component and the carboxyl group-containing monomer and exemplified as other copolymerizable monomers for the above-mentioned acrylic polymer (a), and $C_{4-12}$ alkyl (meth)acrylates may be used.

The glass transition temperature (Tg) of the acrylic oligomer (b) is preferably 60°C or higher and more preferably 65 to 180°C. In case where the acrylic oligomer (b) has a glass transition temperature lower than 60°C, the adhesiveness of the pressure-sensitive adhesive is deteriorated and as a result, the foaming/peeling preventive property may be deteriorated. In addition, a glass transition temperature (Tg) of copolymer is the glass transition temperature (theoretical value) shown in the below formula.

$$1/Tg = W_1/Tg_1 + W_2/Tg_2 + ... + W_n/Tg_n$$

In the above formula, Tg means the glass transition temperature of the copolymer (unit: K), $Tg_n$ means the glass transition temperature of the homopolymer of monomer$_n$ (unit: K), and $W_n$ means a weight fraction of the monomer$_n$.

The acrylic oligomer (b) can be prepared by the use of known or common polymerization methods. Same as the above-mentioned method for polymerizing the acrylic polymer (a), examples of methods for polymerizing the acrylic oligomer (b) include a solution polymerization method, an emulsion polymerization method, a bulk polymerization method, and a polymerization method with ultraviolet irradiation. The solution polymerization method is much preferred from the viewpoints of transparency, water resistance, cost, and the like.

In addition, as for polymerization initiators, solvents, and the like for use in polymerization of the acrylic oligomer (b), it is possible to use the same polymerization initiators, solvents, and the like which may be used for the acrylic polymer (a). The amount of the polymerization initiator to be used may be an ordinary amount to be used. For example, the amount thereof can be selected in the range of about 0.1 to 15 parts by weight per 100 parts by weight of total monomer components.

In addition, chain transfer agent may be used in order to control the molecular weight of the acrylic oligomer (b). Examples of the chain transfer agents include 2-mercaptoethanol, lauryl mercaptan, glycidyl mercaptan, mercaptoacetic acid, 2-ethylhexyl thioglycolate, 2,3-dimercapto-1-propanol, and α-methylstyrene dimer. The amount of the chain transfer agent to be used is preferably in the range of, for example, about 0.01 to 15 parts by weight per 100 parts by weight of the total monomer components.

The weight-average molecular weight of the acrylic oligomer (b) is 3,000 to 6,000, preferably 3,300 to 5,500, and more preferably 3,500 to 5,000, from a viewpoint of achieving suitable compatiblity with the polymer and reducing a haze value of the pressure-sensitive adhesive. The weight-average molecular weight of the oligomer can be controlled by the kinds and amounts of the polymerization initiators and the chain transfer agents, and temperature and time during the polymerization; and further controlled by a monomer concentration, a monomer dropping rate, and the like.

In regard to a pressure-sensitive adhesive composition forming a pressure-sensitive adhesive layer of a double-sided pressure-sensitive adhesive sheet of the present invention, a proportion of the acrylic oligomer (b) is 10 to 35 parts by weight and preferably 15 to 30 parts by weight per 100 parts by weight of the acrylic polymer (a). In case where the proportion of the acrylic oligomer (b) per 100 parts by weight of the acrylic polymer (a) is less than 10 parts by weight, the effect (foaming/peeling preventive property) owing to the addition of the acrylic oligomer (b) is hardly exhibited. On the other hand, in case where the proportion thereof exceeds 35 parts by weight, there is a possibility that the oligomer might considerably influence the pressure-sensitive adhesive characteristics of the acrylic polymer (a) (for example, the Tg of the whole system becomes highly increased, the pressure-sensitive adhesive composition becomes rigid, and a low-temperature capability becomes considerably deteriorated) and thus it is not compatible and turbidity occurs. For that reason, it is not preferable.

Since the pressure-sensitive adhesive composition according to the invention contains the acrylic polymer (a) and the acrylic oligomer (b) in specific proportions, the pressure-sensitive adhesive layer made of the pressure-sensitive adhesive composition has excellent transparency. In addition, since the pressure-sensitive adhesive layer has excellent cohesive force (resistance against shearing force) and adhesiveness (resistance in a vertical direction to an interface), when the pressure-sensitive adhesive layer is laminated to a plastic base for use, the pressure-sensitive adhesive layer has excellent foaming/peeling preventive property, which is a property of preventing lifting and peeling at an adhering interface caused by bubbles (foam) generated from the plastic base.

It is preferred that the pressure-sensitive adhesive composition contains a crosslinking agent. By using a crosslinking agent, it is possible to crosslink the acrylic polymer (a) and the acrylic oligomer (b) to thereby enhance the cohesive force as a pressure-sensitive adhesive. Examples of the crosslinking agent include a wide variety of known crosslinking agents. Especially, the preferred crosslinking agents are polyfunctional melamine compounds, polyfunctional epoxy compounds, and polyfunctional isocyanate compounds. Such crosslinking agents can be used alone or as a mixture of two or more kinds thereof.

Examples of the polyfunctional melamine compounds include methylated trimethylolmelamine, and butylated hexamethylolmelamine. Examples of the polyfunctional epoxy compounds include diglycidylaniline, and glycerol diglycidyl ether. Examples of the polyfunctional isocyanate compounds include tolylene diisocyanate, hexamethylene diisocyanate, polymethylenepolyphenyl isocyanate, diphenylmethane diisocyanate, diphenylmethane diisocyanate dimer, products of the reaction of trimethylolpropane with tolylene diisocyanate, products of the reaction of trimethylolpropane with hexamethylene diisocyanate, polyether polyisocyanates, and polyester polyisocyanates.

The amount of the crosslinking agent to be used is not particularly limited. For example, the preferred amount thereof is generally 0.001 to 20 parts by weight and more preferably 0.01 to 10 parts by weight per 100 parts by weight of the acrylic polymer (a).

According to need, the pressure-sensitive adhesive composition may further contain general additives such as ultraviolet absorbers, antioxidants, light stabilizers, aging inhibitors, releasability regulators, tackifiers, plasticizers, softeners, fillers, colorants (pigments, dyes, etc.), surfactants, and antistatic agent.

The pressure-sensitive adhesive composition of the invention can be prepared by mixing the acrylic polymer (a) with the acrylic oligomer (b) and further optionally with a crosslinking agent, solvents, and other additives.

Double-sided pressure-sensitive adhesive sheet

A double-sided pressure-sensitive adhesive sheet of the present invention has at least a pressure-sensitive adhesive layer made of the above-mentioned pressure-sensitive adhesive composition. The double-sided pressure-sensitive adhesive sheet of the invention may have a substrate (a substrate-attached double-sided pressure-sensitive adhesive sheet) or may only have a pressure-sensitive adhesive layer without substrate (a substrate-less double-sided pressure-sensitive adhesive sheet). Among these, the substrate-less double-sided pressure-sensitive adhesive sheet is preferred from a viewpoint of slimizing of products using the double-sided pressure-sensitive adhesive sheet. In addition, the double-sided pressure-sensitive adhesive sheet of the invention may have a shape of a sheet, a tape, and the like.

A thickness of the pressure-sensitive adhesive layer of the double-sided pressure-sensitive adhesive sheet of the invention is 3 to 15 $\mu$m and preferably 6 to 15 $\mu$m. In case where the thickness of the pressure-sensitive adhesive layer is less than 3 $\mu$m, the pressure-sensitive adhesive layer is so thin that it is impossible to perform stress dispersion, whereby the pressure-sensitive adhesive layer is easy to be peeled and the applicability of the pressure-sensitive adhesive layer is deteriorated. In case where the thickness of the pressure-sensitive adhesive layer exceeds 15 $\mu$m, a thickness of a coated layer (pressure-sensitive adhesive layer before drying) is thick at the time of coating and drying, so that a thickness unevenness of the whole surface of the pressure-sensitive adhesive layer is increased due to convection in the coated layer. Moreover, it is not preferred to slimize a product using the double-sided pressure-sensitive adhesive sheet. The pressure-sensitive adhesive layer may be any shape of single layer and laminate. In addition, in case where the double-sided pressure-sensitive adhesive sheet has the pressure-sensitive adhesive layer on each surface of the substrate, the thickness of each pressure-sensitive adhesive layer may be in the above range.

In case where the double-sided pressure-sensitive adhesive sheet of the invention is a substrate-attached double-sided pressure-sensitive adhesive sheet, the pressure-sensitive adhesive layer is provided on each surface the substrate. Examples of the substrate are not particularly limited but include plastic films or sheets made of plastic materials such as polyester resins, e.g., polyethylene terephthalate (PET); acrylic resins, e.g., polymethyl methacrylate (PMMA); polycarbonate resins; triacetylcellulose; polysulfones; polyarylates; polyimides; polyvinyl chloride; polyvinyl acetate; olefin resins, e.g., polyethylene, polypropylene, ethylene-propylene copolymer, product name "Arton" (cycloolefin polymer; manufactured by JSR Co., Ltd.), and product name "Zeonor" (cycloolefin polymer; manufactured by Nippon Zeon Co., Ltd.). Such plastic materials can be used alone or in combination of two or more kinds thereof.

The thickness of the substrate is not particularly limited. However, for example, it is preferably 3 to 25 $\mu$m. In this regard, the substrate may have either a single-layer constitution or a multilayer constitution. The surfaces of the substrate may have undergone an appropriate surface treatment which is known or in common use, e.g., a physical treatment such as corona discharge treatment or plasma treatment or a chemical treatment such as undercoating.

It is preferred that the substrate is a transparent substrate having excellent transparency. For example, the total light transmittance of the substrate as measured in the visible light wavelength region (in accordance with JIS K 7361) is preferably 85% or higher, more preferably 88% or higher, and much preferably 90% or higher. A haze value of the substrate (in accordance with JIS K 7136) is preferably 1.5% or lower and more preferably 1.0% or lower.

The double-sided pressure-sensitive adhesive sheet of the invention may have other layers (e.g., an interlayer and an undercoat layer) so long as these layers do not lessen the effects of the invention.

A thickness unevenness of the whole surface of the pressure-sensitive adhesive layer of the double-sided pressure-sensitive adhesive sheet of the invention is 0.030 $\mu$m or less, preferably 0 to 0.030 $\mu$m, and more preferably 0 to 0.020 $\mu$m. The thickness unevenness of the whole surface of the pressure-sensitive adhesive layer shows a minute variation in a thickness of the pressure-sensitive adhesive layer. When the variation in the thickness of the pressure-sensitive adhesive layer is large, unevenness is considerably appeared and deflection on appearance occurs. When the variation is small, the appearance looks smooth and even. In case where a smooth thin layer (for example, PET film) is attached on a base by the use of a double-sided pressure-sensitive adhesive sheet, when there is a minute variation in the thickness of the pressure-sensitive adhesive layer of the pressure-sensitive adhesive sheet, the thin layer to be attached is effected by the minute variation in the thickness of the pressure-sensitive adhesive layer and then a minute unevenness is generated on a surface of the thin layer. In the applications such as display, when such an unevenness is present on the surface thereof, a reflected light mottle occurs on the surface, so that a poor appearance of the product, for example that the surface of the display looks like an orange peel, is caused. In case where the thickness unevenness of the whole surface of the pressure-sensitive adhesive layer is 0.030 $\mu$m or less, a poor appearance due to the minute variation in the thickness of the pressure-sensitive adhesive layer does not occur, which is desirable in view of the quality of product.

A value of the "thickness unevenness of the whole surface of the pressure-sensitive adhesive layer" in the invention is a standard deviation of the thickness of the pressure-sensitive adhesive layer, which is calculated from an interference fringe obtained by a laser interferometer in accordance with a fringe scanning method (stripe scanning method) in the measurement range of 30 mn $\phi$ ($\phi$: diameter of the measurement range).

Specifically, the value is calculated as below.

At first, the pressure-sensitive adhesive layer is measured using a laser interferometer (using He-Ne laser), and the interference fringe thus obtained is converted into a thickness h of the pressure-sensitive adhesive layer in accordance with a fringe scanning method (stripe scanning method). In the measurement range of 30 mm $\phi$, N number of data of the thickness of the pressure-sensitive adhesive layer $h_i$ (=$h_1$, $h_2$, $h_3$,...., $h_N$) (i is an integer in the range of 1 to N) is obtained and thus the standard deviation of the thickness of the pressure-sensitive adhesive layer is calculated in accordance with the following formula (1).

$$\text{(Thickness unevenness of the whole surface)} = \sqrt{\frac{\Sigma h_i^2}{N} - \left(\frac{\Sigma h_i}{N}\right)^2} \qquad (1)$$

Incidentally, N is a number of measurement points (number of sampling) and is not particularly limited. For example, it is any integer in the range of 1,000 to 50,000 (preferably 10,000 to 50,000). In addition, in the formula (1), "$\Sigma$" shows a "summation of a value obtained from i = 1 to N".

The double-sided pressure-sensitive adhesive sheet of the invention desirably has a high transparency. For example, when measured with laminating the double-sided pressure-sensitive adhesive sheet to a slide glass (which has, for example, the total light transmittance of 91.8%; and the haze value of 0.2%) in accordance with JIS K 7361, it is preferred that a value of the total light transmittance of the double-sided pressure-sensitive adhesive sheet is 90% or higher and preferably 91 % or higher, and a haze value thereof is preferably 1.5% or lower and more preferably 1.0% or lower. Incidentally, the value of the total light transmittance and the haze value are those of a part which does not include a separator described below.

The double-sided pressure-sensitive adhesive sheet of the invention can be prepared by known or common methods for preparing double-sided pressure-sensitive adhesive sheet. For example, in case of substrate-less double-sided pressure-sensitive adhesive sheet, the above-mentioned pressure-sensitive adhesive composition (pressure-sensitive adhesive composition solution) is applied on a separator (release liner) to have a designated thickness on dry basis and thus a coating layer of the pressure-sensitive adhesive composition is formed. After that, the coating layer is dried and hardened according to need to form the pressure-sensitive adhesive layer, thereby preparing the double-sided pressure-sensitive adhesive sheet. In addition, another separator may be provided even on the surface (pressure-sensitive surface) opposite to the surface on which the above-mentioned separator is provided (that is, it may be a structure where the pressure-sensitive adhesive layer is sandwiched between two sheets of the separators.)

In case of the substrate-attached double-sided pressure-sensitive adhesive sheet, the pressure-sensitive adhesive layer may be provided by directly applying the pressure-sensitive adhesive composition on a substrate surface, followed by drying (direct applying method). Alternatively, the pressure-sensitive adhesive layer may be provided on the substrate by forming a pressure-sensitive adhesive layer on a separator as the same as above and then transferring (laminating) the pressure-sensitive adhesive layer to a substrate (transfer method). In addition, another separator may be provided on the pressure-sensitive adhesive surface on which the separator is not provided.

In case of preparing the double-sided pressure-sensitive adhesive sheet of the invention, as for a method for applying the pressure-sensitive adhesive composition (pressure-sensitive adhesive composition solution), known coating methods can be used and a coater in common use can be used, such as, a gravure roll coater, reverse-roll coater, kiss-roll coater, dip-roll coater, bar coater, knife coater, spray coater, and fountain die coater.

In case of preparing the double-sided pressure-sensitive adhesive sheet of the invention, it is preferred that a thickness (before drying) of the coating layer, which is formed by applying the pressure-sensitive adhesive composition (pressure-sensitive adhesive composition solution), is 60 $\mu$m or less and more preferably 50 $\mu$m or less. In case where the thickness of the coated layer is so thick as exceeding 60 $\mu$m, intense convection occurs in the coating layer during a drying process of the coating layer, so that a minute variation in the thickness of the pressure-sensitive adhesive layer (on dry basis) occurs and thus a value of a thickness unevenness of the whole surface of the pressure-sensitive adhesive layer may be increased in some cases.

According to the invention, it is preferred to increase a concentration of a solid content in the pressure-sensitive adhesive composition (pressure-sensitive adhesive composition solution) to some degree in order to regulate the thickness of the pressure-sensitive adhesive layer in an appropriate range while slimizing the thickness of the coating layer as above. The concentration of the solid content in the pressure-sensitive adhesive composition is not particularly limited but is preferably 20% by weight or higher and more preferably 23% by weight or higher. In case where the concentration of the solid content is less than 20% by weight, there may be a case that it is necessary to increase the thickness of the coating layer in order to regulate the thickness of the pressure-sensitive adhesive layer on dry basis in the above-mentioned range. In addition, the upper limit of the concentration of the solid content is not particularly limited but is preferably 50% by weight.

In case of preparing the double-sided pressure-sensitive adhesive sheet of the invention, a viscosity of the pressure-sensitive adhesive composition to be applied (measured at 23°C and shearing rate of 20 rpm by BH type viscometer) is preferably 0.5 to 7.0 Pa·s and more preferably 1.0 to 5.0 Pa·s. In case where the viscosity of the pressure-sensitive adhesive composition is less than 0.5 Pa·s, the coating layer easily becomes uneven and thus the thickness unevenness of the whole surface of the pressure-sensitive adhesive layer may be increased. On the other hand, when the viscosity of the pressure-sensitive adhesive composition exceeds 7.0 Pa·s, the viscosity of the pressure-sensitive adhesive composition gets high and thus applicability may be deteriorated. The viscosity of the pressure-sensitive adhesive composition can be regulated by the weight-average molecular weight of the acrylic polymer (a) and the acrylic oligomer (b) and the content proportions thereof, the concentration of the solid content, and the kinds of solvent.

In a process of preparing the double-sided pressure-sensitive adhesive sheet of the invention, in case of drying the coating layer formed by applying the pressure-sensitive adhesive composition, the preferred drying method is to start drying at comparatively low temperature and then dry at high temperature. In a general preparation of pressure-sensitive adhesive sheets, drying under high-temperature condition for a short period of time as much as bubbles are not generated on the coated layer is in general from a viewpoint of increasing production efficiency. However, in such drying method, since the evaporation rate of solvent is fast and intense convection occurs in the coating layer, the thickness unevenness of the whole surface of the pressure-sensitive adhesive layer is easily increased. For that reason, at an early stage of drying where the evaporation of solvent is mainly performed, steps of inhibiting a rapid evaporation of the solvent by carrying out drying at comparatively low temperature and then removing a remained solvent portion and a monomer portion remained during a polymerization by high-temperature drying are effective for inhibiting the variation in the thickness thereof while maintaining productivity, thereby decreasing the thickness unevenness of the whole surface of the pressure-sensitive adhesive layer. Since specific drying conditions are different according to the thickness of the coating layer, a formation of the pressure-sensitive adhesive composition, and the concentration of the solid content, the drying conditions are not particularly limited. However, for example, there may be exemplified a method of drying at 20 to 80°C (preferably 30 to 70°C) for 20 to 180 seconds (preferably 30 to 120 seconds) and then drying at 90 to 180°C (preferably 100 to 150°C) for 30 to 180 seconds (preferably 30 to 120 seconds). In addition, the drying condition is not limited to the above-mentioned two-stage condition and it may include three stages or more.

As for a method for decreasing the thickness unevenness of the whole surface of the pressure-sensitive adhesive layer, other than the above-mentioned multi-stage drying, it is possible to use a solvent having a slow evaporation rate. It is preferable to use the solvent having the slow evaporation rate, because even if drying is carried out at high temperature from the start of the drying, it is difficult to cause a change in the thickness of the pressure-sensitive adhesive layer due to a rapid evaporation of the solvent. Examples of such solvent having the slow evaporation rate include toluene, xylene, butyl acetate, isobutyl acetate, methyl isobutyl ketone (MIBK), cyclohexanone, and methyl cyclohexanone.

In the double-sided pressure-sensitive adhesive sheet of the invention, a separator (release film) may be used in order to protect the surface of the pressure-sensitive adhesive layer (pressure-sensitive adhesive surface) before the time of use. The separator is released at the time of using the pressure-sensitive adhesive surface protected by the separator (that is, at the time of adhering the pressure-sensitive adhesive sheet to adherends). As for the separator, a release paper in common use and the like can be used. Specifically, examples of the separator include a substrate having a release-treatment layer by a releasant treatment agent on at least one surface thereof, as well as a substrate having low adhesiveness, which is composed of a fluorine polymer (such as polytetrafluoroethylene, polychlorotrifluoroethylene, polyvinyl fluoride, polyvinylidene fluoride, tetrafluoroethylene-hexafluoropropylene copolymer, and chlorofluoroethylene-vinylidene fluoride copolymer) and a substrate having low adhesiveness, which is composed of a nonpolar polymer (e.g., olefin resins such as polyethylene, and polypropylene).

Among the above-mentioned separators, a separator in which a releasant-treatment layer is provided on at least one surface of a substrate to be used as a release liner may be suitably used. Examples of the substrates to be used as a release liner include plastic substrate films (synthetic resin films) such as polyester film (e.g., polyethylene terephthalate film etc.), olefin resin films (e.g., polyethylene film, polypropylene film, etc.), polyvinyl chloride films, polyimide films, polyamide films (e.g., nylon film), and rayon films; papers (e.g., high-quality paper, Japanese paper, kraft paper, glassine paper, synthetic paper, topcoat paper, etc); and the multi-layered substrates (laminate of two or three layers) obtained by laminating or coextruding the above-mentioned substrates. In addition, the releasant treatment agents constituting the releasant-treatment layer are not particularly limited but silicon releasant treatment agent, fluorine releasant treatment agent, long-chained alkyl releasant treatment agent and the like may be used. The releasant treatment agents can be used alone or in combination of two or more kinds thereof.

As for the separator, a separator in which a releasant-treatment layer is provided on at least one surface of a plastic film may be suitably used. An arithmetic average roughness (Ra) value (in accordance with JIS B 0601-2001) on the releasant-treated surface of the plastic film for such separators is preferably 0.05 $\mu$m or less and more preferably 0.03 $\mu$m or less. In case where the Ra value exceeds 0.05 $\mu$m, a variation of the thickness of the pressure-sensitive adhesive layer may easily be generated due to unevenness on the surface of the separator in the course of forming the pressure-sensitive adhesive layer on the separator. Moreover, unevenness of the separator may be transferred to the pressure-sensitive adhesive layer and the surface of the pressure-sensitive adhesive layer may become rough during the pressure-sensitive adhesive layer is protected and preserved by the separator, so that the thickness unevenness of the whole surface of the pressure-sensitive adhesive layer tends to be increased. Incidentally, the separator is provided in such a way that the surface of the releasant-treated layer (releasant-treated surface) is brought into contact with the surface of the pressure-sensitive adhesive layer.

Examples of adherends to be adhered to the double-sided pressure-sensitive adhesive sheet of the invention are not particularly limited but include plastic bases such as an acrylic resin plate, and a polycarbonate resin plate, and optical films such as a glass, a polyethylene terephthalate (PET) film, a polarizing plate, and a conductive film.

The double-sided pressure-sensitive adhesive sheet of the invention is a thin film, and it also has excellent adhesiveness and transparency and moreover, has excellent foaming/peeling preventive property. Therefore, when the double-sided pressure-sensitive adhesive sheet is used even under high-temperature and high-humidity conditions, deterioration in visibility due to bubbles and the like do not occur. In addition, since the thickness unevenness of the whole surface of the pressure-sensitive adhesive layer is small, a poor appearance such as a reflected light mottle does not occur. Accordingly, the double-sided pressure-sensitive adhesive sheet is much suitably used in the display applications such as a plasma display panel (PDP), a touch panel, a liquid crystal panel, and the like. The above-mentioned displays are used, for example, in mobile devices such as a cellular phone and a smart phone; televisions, computers, and the like.

Examples

The present invention will be explained below in more detail with reference to Examples, but the invention is not limited to these Examples.

Acrylic Polymer Preparation Example 1

Into a separable flask, 97 parts by weight of butyl acrylate, 3 parts by weight of acrylic acid, 0.3 parts by weight of azobisisobutyronitrile, and 233.8 parts by weight of ethyl acetate as a polymerization solvent were introduced. The contents were stirred for 1 hour while introducing nitrogen gas into the flask. After the oxygen present in the polymerization system was removed, the mixture was heated to 63°C and reacted for 10 hours to obtain an acrylic polymer solution having a concentration of a solid content of 30% by weight (sometimes referred to as "acrylic polymer solution A"). The acrylic polymer (acrylic polymer A) in the acrylic polymer solution A had a weight-average molecular weight of 550,000.

Acrylic Polymer Preparation Example 2

The same procedure as in Acrylic Polymer Preparation Example 1 was conducted, except that use was made of 95 parts by weight of butyl acrylate, 5 parts by weight of acrylic acid, and 0.2 parts by weight of azobisisobutyronitrile. Thus, an acrylic polymer solution having a concentration of a solid content of 30% by weight (sometimes referred to as "acrylic polymer solution B") was obtained. The acrylic polymer (acrylic polymer B) in the acrylic polymer solution B had a weight-average molecular weight of 700,000.

Acrylic Polymer Preparation Example 3

The same procedure as in Acrylic Polymer Preparation Example 1 was conducted, except that use was made of 0.12 parts by weight of azobisisobutyronitrile. Thus, an acrylic polymer solution having a concentration of a solid content of 30% by weight (sometimes referred to as "acrylic polymer solution C") was obtained. The acrylic polymer (acrylic polymer C) in the acrylic polymer solution C had a weight-average molecular weight of 1,000,000.

Acrylic Oligomer Preparation Example 1

Into a separable flask, 95 parts by weight of cyclohexyl methacrylate (glass transition temperature of the homopolymer (polycyclohexyl methacrylate): 66°C), 5 parts by weight of acrylic acid, 3 parts by weight of 2-mercaptoethanol, 0.2 parts by weight of azobisisobutyronitrile, and 120 parts by weight of toluene as a polymerization solvent were introduced. The contents were stirred for 1 hour while introducing nitrogen gas into the flask. After the oxygen present in the polymerization system was removed, the mixture was heated to 70°C and reacted for 3 hours and was then further reacted at 75°C for 2 hours to obtain an acrylic oligomer solution having a concentration of a solid content of 50% by weight (sometimes referred to as "acrylic oligomer solution a"). The acrylic oligomer (acrylic oligomer a) in the acrylic oligomer solution a had a weight-average molecular weight of 4,000.

Acrylic Oligomer Preparation Example 2

Into a separable flask, 95 parts by weight of cyclohexyl methacrylate, 5 parts by weight of acrylic acid, 10 parts by weight of $\alpha$-methylstyrene dimer, 10 parts by weight of azobisisobutyronitrile, and 120 parts by weight of toluene as a polymerization solvent were introduced. The contents were stirred for 1 hour while introducing nitrogen gas into the flask. After the oxygen present in the polymerization system was removed, the mixture was heated to 85°C and reacted for 5 hours to obtain an acrylic oligomer solution having a concentration of a solid content of 50% by weight (sometimes referred to as "acrylic oligomer solution b"). The acrylic oligomer (acrylic oligomer b) in the acrylic oligomer solution b had a weight-average molecular weight of 4,300.

Example 1

100 parts by weight (on solid basis) of acrylic polymer solution A was mixed with 25 parts by weight (on solid basis) of acrylic oligomer solution a and 0.7 parts by weight (on solid basis) of isocyanate crosslinking agent (product name "Colonnade L" manufactured by Japan Polyurethane Inc.), and further a viscosity of the mixture was regulated by toluene to prepare a pressure-sensitive adhesive composition solution (concentration of solid content: 27% by weight, viscosity: 1.5 Pa·s). The solution was applied to the releasant-treated surface of a separator prepared by subjecting a polyethylene terephthalate film having the thickness of 38 $\mu$m with Ra of 0.025 $\mu$m to a releasant treatment on one side thereof, according to a cast coating so as to give a dry thickness of 12 $\mu$m (coating layer thickness of 45 $\mu$m). After that, the coating was dried with heating at 60°C for 30 seconds and further at 150°C for 1 minute, and was aged at 23°C for 120 hours to thereby produce a double-sided pressure-sensitive adhesive sheet (substrate-less type).
In addition, the same separator was provided on the pressure-sensitive adhesive surface opposite to the pressure-sensitive adhesive surface on which the above-mentioned separator was provided.

Examples 2 to 4 and Comparative Examples 1 to 4

As shown in Table 1, the same procedure as in Example 1 was conducted to prepare the double-sided pressure-sensitive adhesive sheet (substrate-less type), by changing the kinds of acrylic polymer and acrylic oligomer, kinds and adding amounts of crosslinking agents, concentration of the solid content, and coating thickness. Incidentally, epoxy crosslinking agent (product name "Tetrad C"; manufactured by Mitsubishi Gas Chemical Company, Inc.) was used as a crosslinking agent.
Incidentally, the concentration of the solid content was regulated so that the viscosity of each pressure-sensitive adhesive composition solution became 1.5 Pa·s.

Example 5

The pressure-sensitive adhesive composition solution same as in Example 2 was cast coated on a separator and then the coating was dried and aged in the same manner as in Example 1 to obtain a pressure-sensitive adhesive layer. The pressure-sensitive adhesive layer was transferred to one surface of PET film having thickness of 25 $\mu$m (total light transmittance: 90%; haze value: 0.8%). In addition, another pressure-sensitive adhesive layer was similarly transferred to the other surface of the PET film to produce a double-sided pressure-sensitive adhesive sheet (substrate-attached type.)

Example 6

The acrylic polymer solution A was heated and the solvent was evaporated until the concentration of the solid content became 60% by weight. Subsequently, xylene and butyl acetate were added to the solution. In addition, 100 parts by weight (on solid basis) of acrylic polymer solution A was mixed with 25 parts by weight (on solid basis) of acrylic oligomer solution a and 0.7 parts by weight (on solid basis) of isocyanate crosslinking agent (product name "Colonnade L" manufactured by Japan Polyurethane Inc.) to obtain a pressure-sensitive adhesive composition solution having a concentration of a solid content of 30% and a viscosity of 1.7 Pa·s.

As shown in Table 1, the prepared solution was cast-coated to a separator, which was prepared by subjecting a polyethylene terephthalate film to a releasant treatment on one side thereof, in the same manner as in Example 1. After that, the coating was dried at 100°C for one minute and further at 155°C for one minute, and was aged at 23°C for 120 hours to thereby produce a double-sided pressure-sensitive adhesive sheet (substrate-less type.)

Comparative Example 5

Into a separable flask, 97 parts by weight of butyl acrylate and 3 parts by weight of acrylic acid as monomer components, 0.3 parts by weight of 2,2'-azobisisobutyronitrile as a polymerization initiator, and 233.8 parts by weight of ethyl acetate as a polymerization solvent were introduced. The contents were stirred for 1 hour while introducing nitrogen gas into the flask. After the oxygen present in the polymerization system was removed, the mixture was heated to 63°C and reacted for 10 hours to obtain an acrylic polymer solution having a concentration of a solid content of 30% by weight. The acrylic polymer in the acrylic polymer solution had a weight-average molecular weight of 550,000.

Into a separable flask, 95 parts by weight of cyclohexyl methacrylate (glass transition temperature of the homopolymer (polycyclohexyl methacrylate): 66°C) and 5 parts by weight of acrylic acid as monomer components, 3 parts by weight of 2-mercaptoethanol as a chain transfer agent, 0.2 parts by weight of 2,2'-azobisisobutyronitrile as a polymerization initiator, and 103.2 parts by weight of toluene as a polymerization solvent were introduced. The contents were stirred for 1 hour while introducing nitrogen gas into the flask. After the oxygen present in the polymerization system was removed, the mixture was heated to 70°C and reacted for 3 hours and was then further reacted at 75°C for 2 hours to obtain an oligomer solution having a concentration of a solid content of 50% by weight. The oligomer in the oligomer solution had a weight-average molecular weight of 4,000.

100 parts by weight (on solid basis) of the acrylic polymer solution was mixed with 20 parts by weight (on solid basis) of the oligomer and 0.05 parts by weight (on solid basis) of product name "Tetrad C" (tetrafunctional epoxy crosslinking agent; manufactured by Mitsubishi Gas Chemical Company, Inc.) as a crosslinking agent to prepare a pressure-sensitive adhesive solution. The pressure-sensitive adhesive solution was applied onto a releasant-treated surface of a polyethylene terephthalate film (thickness of 38 $\mu$m), in which one side thereof was subjected to the releasant treatment, by cast coating to have a thickness of about 25 $\mu$m on a dry basis. After that, the coating was dried with heating at 130°C for 3 minutes and was aged at 50°C for 72 hours to thereby obtain a pressure-sensitive adhesive sheet (substrate-less-type double-sided pressure-sensitive adhesive sheet).

Evaluation

Each of the double-sided pressure-sensitive adhesive sheets obtained in Examples 1 to 6 and Comparative Examples 1 to 5 was evaluated for a thickness unevenness of the whole surface of the pressure-sensitive adhesive layer, a foaming/peeling preventive property, a laminated appearance, the total light transmittance, and a haze value in accordance with the following measuring methods and evaluation methods. The evaluation results are shown in Table 1.

(1) Thickness unevenness of the whole surface of the pressure-sensitive adhesive layer

A sample configuration (PET separator/pressure-sensitive adhesive layer/PET separator) was measured by the use of a laser interferometer "F601 (planar measurement)" manufactured by Fujinon Co., Ltd. at a slant of 45°. A value was analyzed by the use of an interference fringe analyzing apparatus "A1" manufactured by Fujinon Co., Ltd., and "RMS value" was regarded as a value of thickness unevenness of the whole surface.

Measured View: 30 mm $\phi$
Number of Sampling (N): 35,235 points
Analyzing Mode: SOFT Mode

(2) Foaming/peeling preventive property

One pressure-sensitive adhesive surface of each double-sided pressure-sensitive adhesive sheet obtained by Examples and Comparative Examples was laminated to a polyethylene terephthalate (PET) film ("A4300" manufactured by Toyobo Co., Ltd.; thickness of 125 μm). The other pressure-sensitive adhesive surface was applied and fixed to a polycarbonate (PC) plate having a thickness of 1 mm (laminated at linear pressure of 50 N/cm and 23°C and, aged at 50°C for 24 hours after the lamination), to thereby produce a sample piece having a layer constitution composed of PET film/pressure-sensitive adhesive layer/PC plate. This sample piece was placed in an oven of 80°C for 5 hours to thereby conduct a heat resistance test. After this heat resistance test, the sample piece was visually examined for the presence of appearance defects such as bubbles and lifting at the adhering interface. When neither bubbles nor lifting was observed at all, it was evaluated as "good", and when bubbles or lifting was observed at least slightly, it was evaluated as "poor".

(3) Total light transmittance and haze value

One pressure-sensitive adhesive surface of each double-sided pressure-sensitive adhesive sheet obtained by Examples and Comparative Examples was laminated to a slide glass (product name "S-1111" manufactured by MATSUNAMI Ltd.) and a separator was released from the other pressure-sensitive adhesive surface to thereby produce a test piece having a layer constitution composed of pressure-sensitive adhesive layer/slide glass. The haze value of this test piece was measured with a hazemeter (product name "HM-150" manufactured by Murakami Color Research Laboratory). The haze value (%) was determined using the following equation.

$$\text{haze value (\%)} = (\text{diffuse transmittance/total light transmittance}) \times 100$$

In addition, in case of a substrate film, the haze value was measured without using slide glass.

(4) Laminated appearance

One pressure-sensitive adhesive surface of each double-sided pressure-sensitive adhesive sheet obtained by Examples and Comparative Examples was laminated to a soda-lime glass (manufactured by MATSUNAMI Ltd.; product number S; thickness of 1.0 mm). The other pressure-sensitive adhesive surface was laminated to aluminium-deposited polyester film ("Metalumy #50" manufactured by Toray Co., Ltd.). Light of a fluorescent lamp was allowed to reflect from the soda-lime glass side and observation was made. When the reflected and combined image of the fluorescent lamp did not look twisted, the appearance was evaluated as good, and when it looked like twisted, the appearance was evaluated as poor.

## Table 1

| | | | Ex. 1 | Ex. 2 | Ex. 3 | Ex. 4 | Ex. 5 | Ex. 6 | Comp. Ex. 1 | Comp. Ex. 2 | Comp. Ex. 3 | Comp. Ex. 4 | Comp. Ex. 5 |
|---|---|---|---|---|---|---|---|---|---|---|---|---|---|
| Pressure-sensitive Adhesive Composition Solution | Acrylic Polymer | Kinds | A | B | B | B | B | A | B | C | B | B | |
| | | Compounded Amount (parts by weight) | 100 | 100 | 100 | 100 | 100 | 100 | 100 | 100 | 100 | 100 | |
| | Acrylic Oligomer | Kinds | a | b | b | b | b | a | b | b | b | b | |
| | | Compounded Amount (parts by weight) | 25 | 25 | 25 | 25 | 25 | 25 | 5 | 25 | 25 | 25 | |
| | Cross-Liking Agent | Kinds | Colonnade L | Tetrad C | Tetrad C | Tetrad C | Tetrad C | Colonnade L | Tetrad C | Tetrad C | Tetrad C | Tetrad C | |
| | | Compounded Amount (parts by weight) | 0.7 | 0.075 | 0.075 | 0.075 | 0.075 | 0.7 | 0.04 | 0.035 | 0.075 | 0.075 | |
| | Solid Concentration | (% by weight) | 27 | 25 | 25 | 25 | 25 | 30 | 23 | 15 | 25 | 25 | |
| | Viscosity | (Pa·s) | 1.5 | 1.5 | 1.5 | 1.5 | 1.5 | 1.7 | 1.5 | 1.5 | 1.5 | 1.5 | |
| | Applied Thickness | (μm) | 45 | 48 | 36 | 60 | 40 | 40 | 52 | 80 | 80 | 8 | |
| Separator | Ra | (μm) | 0.025 | 0.025 | 0.025 | 0.025 | 0.025 | 0.025 | 0.025 | 0.025 | 0.025 | 0.025 | |
| Substrate | Presence of Substrate | | None | None | None | None | Present | None | None | None | None | None | |
| | Total Light Transmittance | (%) | - | - | - | - | 90.2 | - | - | - | - | - | |
| | Haze Value | (%) | - | - | - | - | 0.8 | - | - | - | - | - | |
| Thickness of Pressure-sensitive Adhesive Layer | | (μm) | 12 | 12 | 9 | 15 | 10 (both sides) | 12 | 12 | 12 | 20 | 2 | 25 |
| Evaluation Result | Thickness Unevenness of Whole Surface of Pressure-sensitive Adhesive Layer (μm) | | 0.014 | 0.014 | 0.012 | 0.018 | 0.025 | 0.019 | 0.017 | 0.035 | 0.034 | 0.008 | 0.047 |
| | Foaming/Peeling Preventive Property | | good | good | good | good | good | good | poor (Foaming) | good | good | poor (Peeling) | good |
| | Laminated Appearance | | good | good | good | good | good | good | good | poor | poor | good | poor |
| | Total Light Transmittance (%) | | 92.20 | 92.20 | 92.20 | 92.20 | 91.20 | 92.20 | 92.20 | 92.20 | 92.20 | 92.20 | 92.20 |
| | Haze Value (%) | | 0.3 | 0.3 | 0.3 | 0.3 | 0.9 | 0.3 | 0.3 | 0.3 | 0.3 | 0.3 | 0.3 |

\* For the conditions of Comparative Example 5, refer to the above-mentioned description.

EP 2 100 933 B1

As apparent from Table 1, the double-sided pressure-sensitive adhesive sheets (Examples) of the invention not only have excellent transparency but are excellent in foaming/peeling preventive properties even if the pressure-sensitive adhesive sheet is stored under high-temperature conditions for a long time. In addition, lamination appearance is excellent. On the other hand, when a compounded proportion of the acrylic oligomer is low (Comparative Example 1), the foaming/peeling preventive property is deteriorated. When a weight-average molecular weight of the acrylic polymer is high, the thickness of the pressure-sensitive adhesive layer is thick, or the thickness unevenness of the whole surface is high (Comparative Examples 2, 3, or 5), a poor appearance occurs. In addition, in case where the thickness of the pressure-sensitive adhesive layer is too thin (Comparative Example 4), there occurs a problem of peeling.

While the present invention has been described in detail and with reference to specific embodiments thereof, it will be apparent to one skilled in the art that various changes and modifications can be made therein without departing from the scope thereof.

This application is based on Japanese patent application No. 2008-063729 filed on March 13, 2008, the entire contents thereof being hereby incorporated by reference.

Further, all references cited herein are incorporated in their entireties.

## Claims

1. A double-sided pressure-sensitive adhesive sheet, comprising a pressure-sensitive adhesive layer which has a thickness of 3 to 15 $\mu$m and comprises a pressure-sensitive adhesive composition containing the following acrylic polymer (a) and acrylic oligomer (b), wherein the acrylic oligomer (b) is contained at a proportion of 10 to 35 parts by weight per 100 parts by weight of the acrylic polymer (a),

   acrylic polymer (a): an acrylic polymer having a weight-average molecular weight of 500,000 to 900,000 and formed from monomer components containing at least 50 to 99% by weight of alkyl (meth)acrylate of which the alkyl group has 4 to 12 carbon atoms, and 1 to 10% by weight of a carboxyl group-containing monomer,

   acrylic oligomer (b): an acrylic oligomer having a weight-average molecular weight of 3,000 to 6,000 and formed from monomer components containing at least 50 to 99% by weight of (meth)acrylic ester, which has a glass transition temperature of 60 to 190°C when it is formed into a homopolymer and has a cyclic structure, and 1 to 10% by weight of a carboxyl group-containing monomer; and

   wherein the pressure-sensitive adhesive layer has a thickness unevenness of the whole surface of 0.030 $\mu$m or less, the thickness unevenness of the whole surface of the pressure-sensitive adhesive layer being a value which is obtained by converting an interference fringe obtained by a laser interferometer into the thickness $h_i$ of the pressure-sensitive adhesive layer in accordance with a fringe scanning method (stripe scanning method) and then making a calculation using the $h_i$ value obtained in the measurement range of a diameter of 30 mm in accordance with the following formula (1):

$$\text{(Thickness unevenness of the whole surface)} = \sqrt{\frac{\Sigma\, h_i^2}{N} - \left(\frac{\Sigma\, h_i}{N}\right)^2} \qquad (1)$$

   wherein i is an integer of 1 to N, and N is a number of sampling.

2. The double-sided pressure-sensitive adhesive sheet according to Claim 1, wherein both the acrylic polymer (a) and the acrylic oligomer (b) are prepared by a solution polymerization method.

3. The double-sided pressure-sensitive adhesive sheet according to Claim 1, wherein a separator, which is prepared by subjecting a plastic film to a releasant treatment to have an arithmetic average roughness (Ra) on the releasant-treated surface of 0.05 $\mu$m or less, is provided on at least one surface of the double-sided pressure-sensitive adhesive sheet in such a way that the releasant-treated surface of the separator is brought into contact with the surface of the pressure-sensitive adhesive layer.

4. The double-sided pressure-sensitive adhesive sheet according to Claim 2, wherein a separator, which is prepared by subjecting a plastic film to a releasant treatment to have an arithmetic average roughness (Ra) on the releasant-treated surface of 0.05 $\mu$m or less, is provided on at least one surface of the double-sided pressure-sensitive adhesive sheet in such a way that the releasant-treated surface of the separator is brought into contact with the surface of the pressure-sensitive adhesive layer.

5. The double-sided pressure-sensitive adhesive sheet according to Claim 3, which is a substrate-less double-sided pressure-sensitive adhesive sheet having no substrate, wherein a separator, which is prepared by subjecting a plastic film to a releasant treatment to have an arithmetic average roughness (Ra) on the releasant-treated surface of 0.05 μm or less, is provided on each surface of the pressure-sensitive adhesive layer in such a manner that the releasant-treated surface of the separator is brought into contact with each surface of the pressure-sensitive adhesive layer.

6. The double-sided pressure-sensitive adhesive sheet according to Claim 4, which is a substrate-less double-sided pressure-sensitive adhesive sheet having no substrate, wherein a separator, which is prepared by subjecting a plastic film to a releasant treatment to have an arithmetic average roughness (Ra) on the releasant-treated surface of 0.05 μm or less, is provided on each surface of the pressure-sensitive adhesive layer in such a manner that the releasant-treated surface of the separator is brought into contact with each surface of the pressure-sensitive adhesive layer.

7. The double-sided pressure-sensitive adhesive sheet according to Claim 1, wherein the pressure-sensitive adhesive layer is provided on each surface of a plastic film substrate having a total light transmittance of 85% or higher and a haze value of 1.5% or lower.

8. The double-sided pressure-sensitive adhesive sheet according to Claim 2, wherein the pressure-sensitive adhesive layer is provided on each surface of a plastic film substrate having a total light transmittance of 85% or higher and a haze value of 1.5% or lower.

9. The double-sided pressure-sensitive adhesive sheet according to Claim 3, wherein the pressure-sensitive adhesive layer is provided on each surface of a plastic film substrate having a total light transmittance of 85% or higher and a haze value of 1.5% or lower.

10. The double-sided pressure-sensitive adhesive sheet according to Claim 4, wherein the pressure-sensitive adhesive layer is provided on each surface of a plastic film substrate having a total light transmittance of 85% or higher and a haze value of 1.5% or lower.

11. The double-sided pressure-sensitive adhesive sheet according to any one of Claims 1 to 10, which has a total light transmittance of 90% or higher and a haze value of 1.5% or lower.

12. A method of fixing a plastic film, which comprises attaching and fixing a plastic film through the double-sided pressure-sensitive adhesive sheet according to any one of claims 1 to 11.

**Patentansprüche**

1. Doppelseitige, druckempfindliche Klebstofffolie, umfassend eine druckempfindliche Klebstoffschicht, die eine Dicke von 3 bis 15 μm besitzt und eine druckempfindliche Klebstoffzusammensetzung umfasst, die das folgende Acrylpolymer (a) und Acryloligomer (b) enthält, wobei das Arcyloligomer (b) in einem Anteil von 10 bis 35 Gewichtsteilen bezogen auf 100 Gewichtsteile des Acrylpolymers (a) enthalten ist,
Acrylpolymer (a): ein Acrylpolymer, das ein Gewichtsmittel des Molekulargewichts von 500.000 bis 900.000 besitzt und aus Monomerkomponenten aufgebaut ist, die mindestens 50 bis 99 Gewichtsprozent Alkyl(meth)acrylat, bei dem die Alkylgruppe 4 bis 12 Kohlenstoffatome besitzt, und 1 bis 10 Gewichtsprozent eines eine Carboxylgruppe enthaltenden Monomers enthalten,
Acryloligomer (b): ein Acryloligomer, das ein Gewichtsmittel des Molekulargewichts von 3.000 bis 6.000 besitzt, und aus Monomerkomponenten aufgebaut ist, die mindestens 50 bis 99 Gewichtsprozent (Meth)acrylester, der eine Glasübergangstemperatur von 60 bis 190 °C besitzt, wenn er als ein Homopolymer gebildet ist, und eine zyklische Struktur besitzt, und 1 bis 10 Gewichtsprozent eines eine Carboxylgruppe enthaltenden Monomers enthalten; und wobei die druckempfindliche Klebstoffschicht eine Dickenunebenheit der gesamten Oberfläche von 0,030 μm oder weniger besitzt, wobei die Dickenunebenheit der gesamten Oberfläche der druckempfindlichen Klebstoffschicht ein Wert ist, der erhalten wird durch Umrechnen eines Interferenzstreifens, der durch ein Laserinterferometer erhalten wird, in die Dicke $h_i$ der druckempfindlichen Klebstoffschicht gemäß eines Streifenscanning Verfahrens (Stripe Scanning Method) und anschließendem Durchführen einer Berechnung unter Verwendung des $h_i$-Wertes, der im Messbereich eines Durchmessers von 30 mm erhalten wird gemäß der folgenden Formel (1):

$$(\text{Dickenunebenheit der gesamten Oberfläche}) = \sqrt{\frac{\Sigma h_i^2}{N} - \left(\frac{\Sigma h_i}{N}\right)^2} \qquad (1)$$

wobei i eine ganze Zahl von 1 bis N ist, und N die Anzahl der Proben ist.

2. Doppelseitige, druckempfindliche Klebstofffolie gemäß Anspruch 1, wobei sowohl das Acrylpolymer (a) als auch das Acryloligomer (b) durch ein Lösungspolymerisationsverfahren hergestellt sind.

3. Doppelseitige, druckempfindliche Klebstofffolie gemäß Anspruch 1, wobei ein Separator, der durch Unterziehen eines Plastikfilms einer Trennmittelbehandlung hergestellt wird, so dass er eine arithmetische durchschnittliche Rauhigkeit (Ra) auf der Oberfläche, die mit dem Trennmittel behandelt wurde, von 0,05 μm oder weniger besitzt, auf mindestens einer Oberfläche der doppelseitigen, druckempfindlichen Klebstofffolie bereitgestellt wird, in einer Weise, dass die mit Trennmittel behandelte Oberfläche des Separators mit der Oberfläche der druckempfindlichen Klebstoffschicht in Kontakt gebracht wird.

4. Doppelseitige, druckempfindliche Klebstofffolie gemäß Anspruch 2, wobei ein Separator, der durch Unterziehen eines Plastikfilms einer Trennmittelbehandlung hergestellt wird, so er dass eine arithmetische durchschnittliche Rauhigkeit (Ra) auf der Oberfläche, die mit dem Trennmittel behandelt wurde, von 0,05 μm oder weniger besitzt, auf mindestens eine Oberfläche der doppelseitigen, druckempfindlichen Klebstofffolie bereitgestellt wird, in einer Weise, dass die mit Trennmittel behandelte Oberfläche des Separators mit der Oberfläche der druckempfindlichen Klebstoffschicht in Kontakt gebracht wird.

5. Doppelseitige, druckempfindliche Klebstofffolie gemäß Anspruch 3, die eine substratlose, doppelseitige, druckempfindliche Klebstofffolie ist, die kein Substrat besitzt, wobei ein Separator, der durch Unterziehen eines Plastikfilms einer Trennmittelbehandlung hergestellt wird, so er dass eine arithmetische durchschnittliche Rauhigkeit (Ra) auf der Oberfläche, die mit dem Trennmittel behandelt wurde, von 0,05 μm oder weniger besitzt, auf jeder Oberfläche der druckempfindlichen Klebstoffschicht bereitgestellt gestellt wird, in einer Weise, dass die mit Trennmittel behandelte Oberfläche des Separators mit jeder Oberfläche der druckempfindlichen Klebstoffschicht in Kontakt gebracht wird.

6. Doppelseitige, druckempfindliche Klebstofffolie gemäß Anspruch 4, die eine substratlose, doppelseitige, druckempfindliche Klebstoffschicht ist, die kein Substrat besitzt,
wobei ein Separator, der durch Unterziehen eines Plastikfilms einer Trennmittelbehandlung hergestellt wird, so dass er eine arithmetische durchschnittliche Rauhigkeit (Ra) auf der Oberfläche, die mit Trennmittel behandelt wurde, von 0,05 μm oder weniger besitzt, auf jede Oberfläche der druckempfindlichen Klebstoffschicht aufgebracht wird, in einer Weise, dass die mit Trennmittel behandelte Oberfläche des Separators mit jeder Oberfläche der druckempfindlichen Klebstoffschicht in Kontakt gebracht wird.

7. Doppelseitige, druckempfindliche Klebstofffolie gemäß Anspruch 1, wobei die druckempfindliche Klebstoffschicht auf jede Oberfläche eines Plastikfilmsubstrats aufgebracht ist, das eine Gesamtlichtdurchlässigkeit von 85 % oder höher und einen Trübungswert von 1,5 % oder geringer besitzt.

8. Doppelseitige, druckempfindliche Klebstofffolie gemäß Anspruch 2, wobei die druckempfindliche Klebstoffschicht auf jede Oberfläche eines Plastikfilmsubstrats aufgebracht ist, das eine Gesamtlichtdurchlässigkeit von 85 % oder höher und einen Trübungswert von 1,5 % oder geringer besitzt.

9. Doppelseitige, druckempfindliche Klebstofffolie gemäß Anspruch 3, wobei die druckempfindliche Klebstoffschicht auf jede Oberfläche eines Plastikfilmsubstrats aufgebracht ist, das eine Gesamtlichtdurchlässigkeit von 85 % oder höher und einen Trübungswert von 1,5 % oder weniger besitzt.

10. Doppelseitige, druckempfindliche Klebstofffolie gemäß Anspruch 4, wobei die druckempfindliche Klebstoffschicht auf jede Oberfläche eines Plastikfilmsubstrats aufgebracht ist, das eine Gesamtlichtdurchlässigkeit von 85 % oder höher und einen Trübungswert von 1,5 % oder weniger besitzt.

11. Doppelseitige, druckempfindliche Klebstofffolie gemäß einem der Ansprüche 1 bis 10, die eine Gesamtlichtdurchlässigkeit von 90 % oder höher und einen Trübungswert von 1,5 % oder weniger besitzt.

**12.** Verfahren zum Fixieren eines Plastikfilms, das das Anheften und Fixieren eines Plastikfilms mittels der doppelseitigen, druckempfindlichen Klebstofffolie gemäß einem der Ansprüche 1 bis 11 umfasst.

## Revendications

**1.** Feuille adhésive sensible à la pression double face comprenant une couche adhésive sensible à la pression qui présente une épaisseur de 3 à 15 $\mu$m et qui comprend une composition adhésive sensible à la pression contenant le polymère acrylique (a) et l'oligomère acrylique (b) suivants, dans laquelle l'oligomère acrylique (b) est contenu dans une proportion de 10 à 35 parties en poids pour 100 parties en poids du polymère acrylique (a),

polymère acrylique (a) : un polymère acrylique présentant un poids moléculaire moyen en poids de 500 000 à 900 000 et formé à partir de constituants monomères contenant au moins 50 à 99 % en poids de méth(acrylate) d'alkyle dont le groupe alkyle présente de 4 à 12 atomes de carbone, et de 1 à 10 % en poids d'un monomère contenant un groupe carboxyle,

oligomère acrylique (b) : un oligomère acrylique présentant un poids moléculaire moyen en poids de 3 000 à 6 000 et formé à partir de constituants monomères contenant au moins 50 à 99 % en poids d'ester (méth)acrylique, lequel présente une température de transition vitreuse de 60 à 190°C lorsqu'il est transformé en un homopolymère et présente une structure cyclique, et de 1 à 10 % en poids d'un monomère contenant un groupe carboxyle ; et

dans laquelle la couche adhésive sensible à la pression présente une irrégularité d'épaisseur de la surface totale de 0,030 $\mu$m ou inférieure, l'irrégularité d'épaisseur de la surface totale de la couche adhésive sensible à la pression étant une valeur qui est obtenue en convertissant une frange d'interférence obtenue par un interféromètre laser en l'épaisseur $h_i$ de la couche adhésive sensible à la pression selon un procédé de balayage de frange (procédé de balayage de bande) et en réalisant ensuite un calcul utilisant la valeur $h_i$ obtenue dans l'intervalle de mesure d'un diamètre de 30 mm selon la formule (1) suivante :

$$(\text{irrégularité d'épaisseur de la surface totale}) = \sqrt{\frac{\Sigma h_i^2}{N} - \left(\frac{\Sigma h_i}{N}\right)^2} \qquad (1)$$

dans laquelle i est nombre entier de 1 à N et N est un nombre d'échantillons.

**2.** Feuille adhésive sensible à la pression double face selon la revendication 1, dans laquelle à la fois le polymère acrylique (a) et l'oligomère acrylique (b) sont préparés par un procédé de polymérisation en solution.

**3.** Feuille adhésive sensible à la pression double face selon la revendication 1, dans laquelle un séparateur qui est préparé en soumettant un film plastique à un traitement de détachement pour présenter une rugosité moyenne arithmétique (Ra) sur la surface traitée par le traitement de détachement de 0,05 $\mu$m ou inférieure, est fourni sur au moins une surface de la feuille adhésive sensible à la pression double face de telle manière que la surface traitée par le traitement de détachement du séparateur est mise en contact avec la surface de la couche adhésive sensible à la pression.

**4.** Feuille adhésive sensible à la pression double face selon la revendication 2, dans laquelle un séparateur, qui est préparé en soumettant un film plastique à un traitement de détachement pour présenter une rugosité moyenne arithmétique (Ra) sur la surface traitée par le traitement de détachement de 0,05 $\mu$m ou inférieure, est fourni sur au moins une surface de la feuille adhésive sensible à la pression double face de telle manière que la surface traitée par un traitement de détachement du séparateur est mise en contact avec la surface de la couche adhésive sensible à la pression.

**5.** Feuille adhésive sensible à la pression double face selon la revendication 3, laquelle est une feuille adhésive sensible à la pression double face ne présentant pas de substrat, dans laquelle un séparateur, lequel est préparé en soumettant un film plastique à un traitement de détachement pour présenter une rugosité moyenne arithmétique (Ra) sur la surface traitée par le traitement de détachement de 0,05 $\mu$m ou inférieure, est fourni sur chaque surface de la couche adhésive sensible à la pression de telle manière que la surface traitée par un traitement de détachement du séparateur est mise en contact avec chaque surface de la couche adhésive sensible à la pression.

6. Feuille adhésive sensible à la pression double face selon la revendication 4, laquelle est une feuille adhésive sensible à la pression double face ne présentant pas de substrat, dans laquelle un séparateur, qui est préparé en soumettant un film plastique à un traitement de détachement pour présenter une rugosité moyenne arithmétique (Ra) sur la surface traitée par le traitement de détachement de 0,05 μm ou inférieur, est fourni sur chaque surface de la couche adhésive sensible à la pression de telle manière que la surface traitée par un traitement de détachement du séparateur est mise en contact avec chaque surface de la couche adhésive sensible à la pression.

7. Feuille adhésive sensible à la pression double face selon la revendication 1, dans laquelle la couche adhésive sensible à la pression est fournie sur chaque surface d'un substrat de film plastique présentant un coefficient de transmission totale de lumière de 85 % ou supérieur et une valeur de voile de 1,5 % ou inférieure.

8. Feuille adhésive sensible à la pression double face selon la revendication 2, dans laquelle la couche adhésive sensible à la pression est fournie sur chaque surface d'un substrat de film plastique présentant un coefficient de transmission totale de lumière de 85 % ou supérieur et une valeur de voile de 1,5 % ou inférieure.

9. Feuille adhésive sensible à la pression double face selon la revendication 3, dans laquelle la couche adhésive sensible à la pression est fournie sur chaque surface d'un substrat de film plastique présentant un coefficient de transmission totale de lumière de 85 % ou supérieur et une valeur de voile de 1,5 % ou inférieure.

10. Feuille adhésive sensible à la pression double face selon la revendication 4, dans laquelle la couche adhésive sensible à la pression est fournie sur chaque surface d'un substrat de film plastique présentant un coefficient de transmission totale de lumière de 85 % ou supérieur et une valeur de voile de 1,5 % ou inférieure.

11. Feuille adhésive sensible à la pression double face selon l'une quelconque des revendications 1 à 10, laquelle présente un coefficient de transmission totale de lumière de 90 % ou supérieur et une valeur de voile de 1,5 % ou inférieure.

12. Procédé de fixation d'un film plastique, lequel comprend l'attache et la fixation d'un film plastique par l'intermédiaire de la feuille adhésive sensible à la pression double face selon l'une quelconque des revendications 1 à 11.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3907611 B
- JP 2005255877 A

- JP 2008063729 A

**Non-patent literature cited in the description**

- Polymer Handbook. John Wiley&Sons, Inc, 1989, vol. 3